# EUROPEAN PATENT APPLICATION

(11) **EP 1 398 970 A1**
(43) Date of publication of application: **17.03.2004**
(21) Application number: 02738716.6
(22) Date of filing: 14.06.2002
(51) Int. Cl.: H04N 7/173

(54) **INFORMATION PROVIDING SYSTEM, BROADCAST RECEPTION APPARATUS, AND SERVER APPARATUS**

(30) Priority: 14.06.2001 JP 2001179983
(71) Applicant: Sony Corporation, Tokyo 141-0001 (JP)
(72) Inventor: HOSODA, Takashi, c/o SONY CORPORATION, Shinagawa-ku, Tokyo 141-0001 (JP); YABE, Jun, c/o SONY CORPORATION, Shinagawa-ku, Tokyo 141-0001 (JP)
(74) Representative: DeVile, Jonathan Mark, Dr.
(86) International application number: PCT/JP2002/005962
(87) International publication number: WO 2002/104029

(57) **Abstract**

A broadcast receiving apparatus is disclosed which allows a broadcasting system not addressing data broadcasts to offer an information-providing service equivalent to what is typically offered in conjunction with data broadcasting. When a user watching a TV program on a channel performs operations to store a scene of the program, the apparatus generates and holds scene information made up at least of information about the channel and of current time information, before transmitting the scene information to a server apparatus. On receiving the scene information, the server apparatus searches for program-related information such as URLs corresponding to the received information and transmits the acquired information using e-mail to a predetermined device (PC, mobile phone) owned by the user.

## Description

### Technical Field

The present invention relates to an information providing system for providing viewers with information related to broadcast programs such as guides, the invention further relating to a broadcast receiving apparatus and a server apparatus constituting the information providing system.

### Background Art

Recent years have witnessed increasing acceptance by the public of so-called digital broadcasts involving digitally broadcasting TV programs through the use of broadcasting or communication satellites. Projects are also under way to implement terrestrial digital broadcasts in the near future.

These digital broadcasts are capable of transmitting not only audio and video data but also diverse kinds of other data such as control scripts prompting users to make a choice out of options related to the content of a TV program being broadcast. This makes it possible to implement what may be called call-in TV programs permitting viewers to take part in the broadcast in bidirectional fashion. Some techniques applicable to digital broadcasting are disclosed illustratively in Japanese Patent Laid-open No. 2001-45447.

In Japan, for example, ARIB (Association of Radio Industries and Businesses) stipulating the criteria for TV broadcast has worked out a data broadcast standard. The established standard recommends that data content be described in BML (Broadcast Markup Language) based on HTML (Hyper Text Markup Language), a description language utilized worldwide to describe illustratively WWW pages on the Internet. Broadcasts pursuant to that standard allow viewers to operate on so-called monomedia in order to establish hyperlink with relevant URLs of program-related information, whereby linked WWW pages can be displayed.

TV broadcast receivers compatible with the data broadcast standard have two distinct capabilities: one for browsing data broadcast contents described in BML, the other for browsing WWW pages written in HTML when connection is established with the Internet. A user (i.e., viewer) viewing such a TV broadcast receiver may operate on its data broadcast content to acquire information which corresponds to the program in question (program-related information) and which is uploaded on the Internet.

To provide viewers with such program-related information requires developing and implementing necessary infrastructure for data broadcasts in the broadcasting system. Consequently, digital satellite broadcast businesses today have yet to beef up their program-related information providing systems. Analog terrestrial broadcasts still remain predominant for the moment, and they are practically incapable of co-opting the program-related information providing system.

As mentioned above, in order to be compatible with data broadcasts, TV receivers need to have the capabilities of extracting data broadcast contents from broadcast signals and browsing the extracted contents. Conventionally, that requires the TV receiver to incorporate a reception circuit unit for addressing data broadcasts and a user interface allowing viewers to browse and operate on data broadcast contents. These requirements entail a larger scale of circuitry and more complicated software design, which can typically result in unacceptably high costs.

### Disclosure of Invention

In solving the foregoing and other problems of the background art and according to a first aspect of the invention, there is provided an information providing system comprising at least a broadcast receiving apparatus and a server apparatus. The broadcast receiving apparatus includes: a receiving and tuning element for receiving and tuning in to broadcast waves; a current time acquiring element for acquiring current time information; an information generating element which, in response to an input instruction, generates identification information made up at least of information about a channel currently selected by the receiving and tuning element and of the current time information acquired by the current time acquiring element; and a transmitting element for transmitting the identification information to the server apparatus over a predetermined network.

The server apparatus includes: a searching element for searching for program-related information about the channel based on the received identification information; and a transmitting element for transmitting the program-related information searched for by the searching element to a predetermined communication device over the predetermined network.

According to a second aspect of the invention, there is provided a broadcast receiving apparatus comprising: a receiving and tuning element for receiving and tuning in to broadcast waves; a current time acquiring element for acquiring current time information; an information generating element which, in response to an input instruction, generates identification information which is made up at least of information about a channel currently selected by the receiving and tuning element and of the current time information acquired by the current time acquiring element, the identification information being intended for use by a server apparatus in searching for program-related information to be transmitted to a predetermined communication device; and a transmitting element for transmitting the identification information to the server apparatus over a predetermined network.

According to a third aspect of the invention, there is provided a server apparatus comprising: a receiving element for receiving channel information and identification information over a predetermined network, the channel information being about at least a channel currently selected by a broadcast receiving apparatus, the identification information having being acquired by the broadcast receiving apparatus; a searching element for searching for program-related information about a program content on the channel in accordance with the received identification information; and a transmitting element for transmitting the program-related information searched for by the searching element to a predetermined communication device over the predetermined network.

Where the structures outlined above are in use, the broadcast receiving apparatus responding to an operation by a user (i.e., viewer) generates identification information made up at least of information about the channel being selected at the moment and of current time information, and transmits the generated information to the server apparatus.

The server apparatus receives the identification information, acquires program-related information corresponding to the received information, and transmits the acquired information to the communication device designated by the user in advance. Through the communication device, the user is able to obtain the desired program-related information.

One advantage of the inventive system configuration is that there is no need for the broadcasting party to have an infrastructure specifically for transmitting data broadcast contents. The server apparatus takes over the task of offering program-related information to those who request the information.

Another advantage of the inventive system configuration is that the receiving party need only generate identification information of a simple structure in response to the viewer's operation and transmit the generated information to the server over a predetermined communication network. There is no need for the receiving party to prepare reception circuits specifically for addressing data broadcast contents or a user interface particularly for dealing with such contents.

### Brief Description of Drawings

Fig. 1 is a conceptual view of a typical information providing system embodying this invention;
Fig. 2 is a block diagram showing a typical internal structure of a broadcast receiving apparatus embodying the invention;
Fig. 3 is a schematic view depicting buttons and controls of a remote controller for use with the inventive broadcast receiving apparatus;
Fig. 4 is a block diagram illustrating a typical internal structure of a server embodying the invention;
Fig. 5 is an explanatory view of an initial setting screen used by a program-related information service;
Fig. 6 is an explanatory view of a scene information list transmission screen;
Fig. 7 is a schematic view indicating a typical structure (i.e., description example) of a scene information list;
Fig. 8 is a schematic view presenting a typical structure of a program-related information database;
Fig. 9 is an explanatory view showing a typical structure of program-related information delivered as an e-mail;
Fig. 10 is an explanatory view picturing a typical display form of program-related information received as an e-mail;
Fig. 11 is a flowchart of steps performed by the broadcast receiving apparatus;
Fig. 12 is another flowchart of steps carried out by the broadcast receiving apparatus; and
Fig. 13 is another flowchart of steps executed by the broadcast receiving apparatus.

### Best Mode for Carrying out the Invention

Preferred embodiments of this invention are described below under the following headings:
1. System configuration
2. Broadcast receiving apparatus
3. Server
4. Program-related information service
5. Processing operations

### 1. System configuration

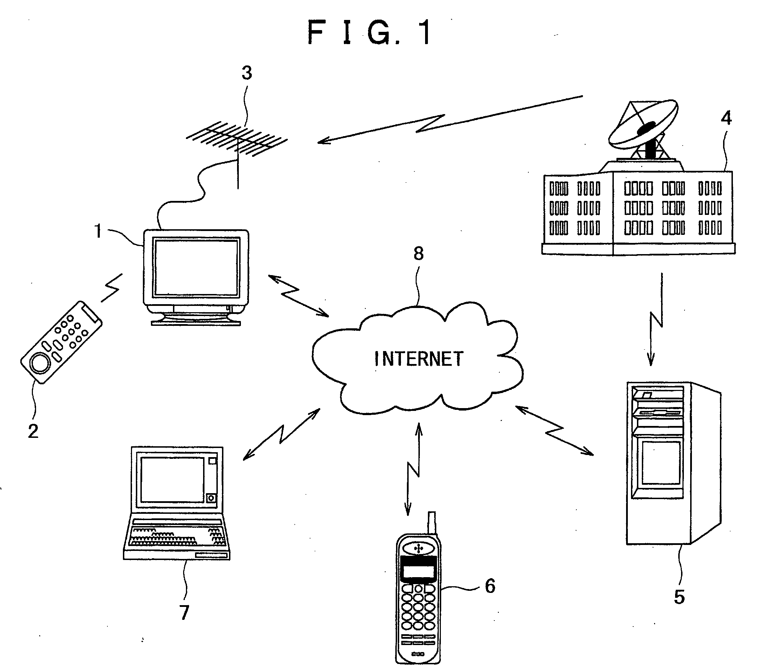

Fig. 1 conceptually shows a typical configuration of an information providing system that embodies the invention by implementing a program-related information service.

A broadcast receiving apparatus 1 in Fig. 1, owned by a user (i.e., viewer), is typically set up in the household and connected with an antenna 3 for receiving broadcast waves.

A broadcasting station 4 transmits broadcast waves representing TV programs. The transmission by the broadcasting station 4 is not limited to any specific form; the transmission may be an analog terrestrial broadcast, an analog satellite broadcast, a digital satellite broadcast, or a digital terrestrial broadcast. The transmission may also be carried out by a cable television setup.

In the configuration of Fig. 1, the broadcast receiving apparatus 1 receives broadcast waves from the broadcasting station 4 by way of the antenna 3. From the received input waves, the apparatus 1 selects a necessary channel and demodulates the TV program sent on the channel for video/audio output.

Fig. 1 also shows a remote controller 2 operated by the user with regard to the broadcast receiving apparatus 1. Operating the remote controller 2 allows the user to select channels, adjust sound volumes, and perform other necessary operations on the broadcast receiving apparatus 1. In particular, when the user wants to obtain guiding information (i.e., program-related information) about the currently broadcast TV program, the remote controller 2 allows the user to store scene information (i.e., identification information) about the program in question. Illustratively, the ongoing TV program may be dealing with a certain restaurant that attracts the user's attention. In that case, the user may operate the remote controller 2 to store scene information on the program in order to acquire program-related information about the restaurant. In response to the user's operation, the broadcast receiving apparatus 1 creates scene information that identifies the scene being watched by the user at the moment and stores the created information.

The broadcast receiving apparatus 1 may store a plurality of items of such scene information. Details of the scene information will be discussed later.

Any one of the multiple items of the scene information thus stored may be selected by the user's operation. The selected scene information may be transmitted from the broadcast receiving apparatus 1 to a server 5 over the Internet 8.

The server 5 retains numerous items of program-related information about the programs broadcast by a number of broadcasting stations covering a certain geographical region. These items of program-related information in storage are associated illustratively with the above-described scene information.

Upon receipt of scene information from a given broadcast receiving apparatus 1, the server 5 searches for the program-related information corresponding to the received scene information. The program-related information thus acquired is transmitted in e-mail format to an Internet-compatible device designated beforehand in the broadcast receiving apparatus 1 having sent the scene information.

In initially setting up the broadcast receiving apparatus 1, the user designates an e-mail address to which program-related information is to be transmitted by the program-related information service. With the current state of the art, a personal computer 7 or a mobile phone 6 owned by the user besides the broadcast receiving apparatus 1 may be designated as the destination to which to transmit program-related information.

Illustratively, the program-related information sent as e-mail from the server 5 is described in HTML. The program-related information is typically made up of URLs (uniform resource locators) for gaining access to the WWW pages that offer information about specific scenes. The URLs are described in a manner permitting hyperlinks to the corresponding pages.

For example, suppose that the scene viewed by the user on the broadcast receiving apparatus 1 is about a restaurant and that the user stores scene information about the scene in question before transmitting the information to the server 5.

It is assumed that the server 5 retains URL information about the restaurant broadcast in the scene viewed by the user, among others. On receiving the scene information from the user, the server 5 searches for and obtains the URLs regarding the restaurant of interest in accordance with the received scene information. The server 5 then transmits the acquired URL information to the personal computer 7 and/or to the mobile phone 6 as an e-mail in HTML.

In turn, the user may open the program-related information received through the personal computer 7 or mobile phone 6, and may operate on any of the URLs as hyperlinks to gain access to the WWW pages about the restaurant. Browsing the accessed WWW pages allows the user to obtain desired information about the restaurant in question.

### 2. Broadcast receiving apparatus

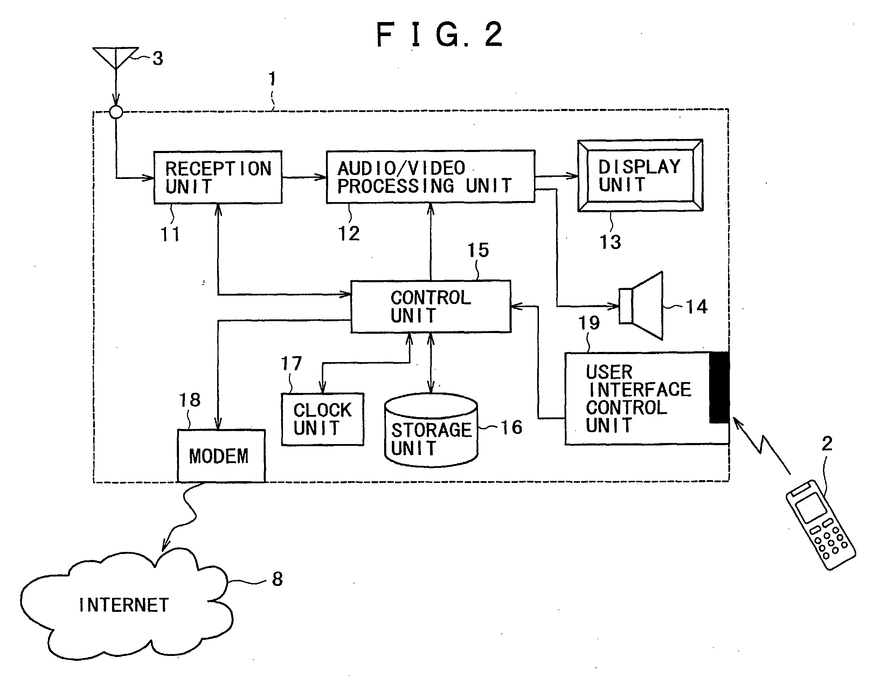

A typical internal structure of the broadcast receiving apparatus 1 embodying the invention will now be described with reference to Fig. 2.

In Fig. 2, broadcast waves transmitted by the broadcasting station 4 are received by the antenna 3 before being forwarded to a reception unit 11 inside the broadcast receiving apparatus 1. Given the input broadcast waves, the reception unit 11 tunes in to a channel designated by a control unit 15. The TV signal sent over the selected channel is fed to a video/audio processing unit 12.

The video/audio processing unit 12 demodulates the input TV signal into video and audio signals. After suitably processing the demodulated video and audio signals, the video/audio processing unit 12 outputs the video signal to a display unit 13 and the audio signal to speakers 14.

The display unit 13 is illustratively made of a CRT or LCD device for picture display. Given the video signal input above, the display unit 13 displays pictures accordingly. The speakers 14 output the input audio signal as sounds. The broadcast receiving apparatus 1 thus receives video and audio signals over the selected broadcast channel and outputs the received signals in a manner allowing the user to enjoy the pictures and sounds represented by the signals.

The broadcast receiving apparatus 1 embodying the invention also has a storage unit 16. The recording medium of the storage unit 16 is not limited to any specific type. With the current state of the art, the storage unit 16 should preferably be constituted by a recording medium of a relatively large capacity such as a hard disc. With this embodiment, the storage unit 16 is designed to accommodate a plurality of items of scene information, to be described later.

Data are written to and read from the storage unit 16 under control of the control unit 15. The control unit 15 has a clock unit 17 for measuring the current time.

The broadcast receiving apparatus 1 of this embodiment includes a modem 18 for effecting communication over the Internet 8. In operation, the modem 18 connects through a telephone line to an Internet service provider on the Internet 8. Preferably, the telephone line should be a high-speed analog line at speeds of at least 56 kbps, a high-speed wireless connection at speeds of 10 to 64 kbps, or an ISDN (Integrated Service Digital Network) connection at speeds of 64 or 128 kbps. In practice, the modem 18 may be replaced by alternative hardware arrangements for connection to the Internet depending on the actually available communication line.

The broadcast receiving apparatus 1 can be operated by the user manipulating the remote controller 2, which is furnished apart from the broadcast receiving apparatus 1.

The remote controller 2 has various buttons and controls which may be operated as needed. Operating these buttons and/or controls causes the remote controller 2 to generate a command signal that is output wirelessly, e.g., by infrared radiation or by radio waves.

The command signal thus transmitted is received by a user interface control unit 19 of the broadcast receiving apparatus 1. The received signal is forwarded from the user interface control unit 19 illustratively to the control unit 15. Given the command signal, the control unit 15 causes relevant functional circuits to perform their functions accordingly, thereby implementing what is intended by the user's operation.

This embodiment, in particular, allows the user to perform a scene storing operation using the remote controller 2, i.e., an operation to store scenes about which the user wishes to obtain program-related information.

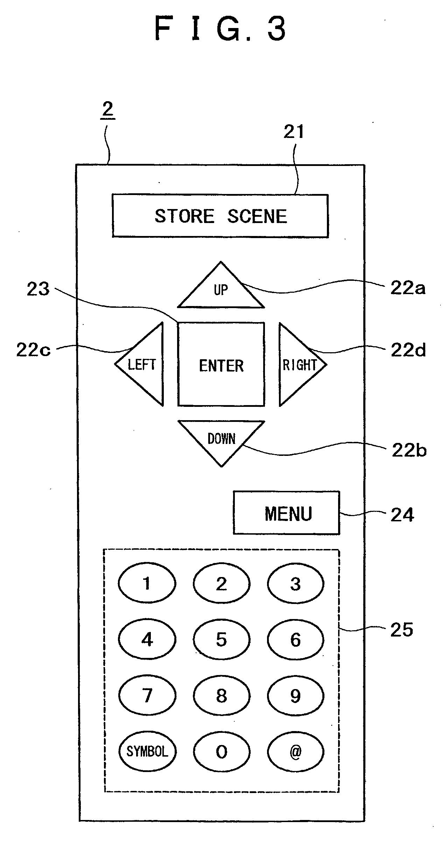

Fig. 3 depicts typical buttons and controls of the remote controller 2 according to the invention. The illustrated buttons and controls are used here to store scenes and transmit a scene information list, as will be described later. There are other keys including a power key, not shown, which is used to turn on and off main power supply to the broadcast receiving apparatus 1.

In Fig. 3, a scene storage key 21 is provided for the user to push when storing a scene. An upward cursor key 22a, a downward cursor key 22b, a leftward cursor key 22c, and a rightward cursor key 22d are provided for use in moving the cursor (i.e., pointer) vertically and horizontally on a user interface screen of the display unit 13. An enter key 23 surrounded by the cursor keys is used definitely to enter the item being selected on the user interface screen.

A menu key 24 is operated to display a menu screen that presents menu items for various settings. A numeric/character key pad 25 is made of a plurality of keys representing numbers and characters. Operating the numeric/character key pad 25 permits switching received channels or inputting numbers and characters into a suitable numeric/character input screen.

### 3. Server

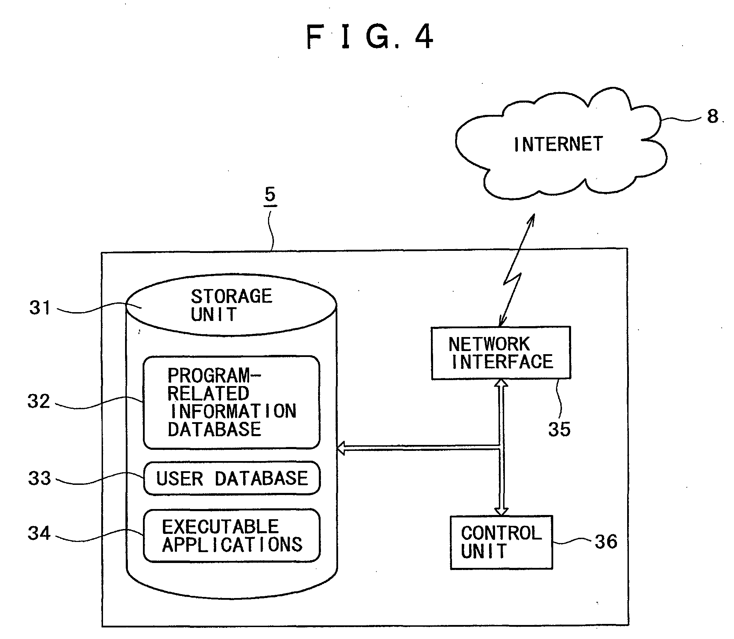

How the server 5 is internally structured will now be described. Fig. 4 schematically shows a typical internal structure of the server 5. As illustrated, the server 5 includes a storage unit 31, a network interface 35, and a control unit 36.

The storage unit 31 retains a program-related information database 32 that has program-related information organized in a database format for distribution. Also retained in the storage unit 31 is a user database 33 that records registered users who are authorized to receive information from this server. The user database 33 is illustratively constituted by user identification information having each of the registered user names associated with a unique password.

Executable applications 34 are made up of various application programs (including GGI, or communication gateway interface program) to be executed by the server 5 implementing necessary operations. For example, there is an application program that searches the program-related information database 32 for program-related information corresponding to a received scene information list. There is also an application program for transmitting retrieved program-related information as an e-mail through the network interface 35 and over the Internet 8. Also included is an application program for transmitting and receiving data through the network interface 35 in compliance with communication protocols compatible with the Internet 8.

The network interface 35 is furnished as interfacing means for connecting with the Internet.

The control unit 36 carries out various control processes as required by the ongoing application program from among the executable applications 34.

The foregoing description has shown the remote controller 2 alone to be capable of operating the broadcast receiving apparatus 1. In practice, the body of the broadcast receiving apparatus 1 may comprise an operation unit with operative functions equivalent to those of the remote controller 2.

### 4. Program-related information service

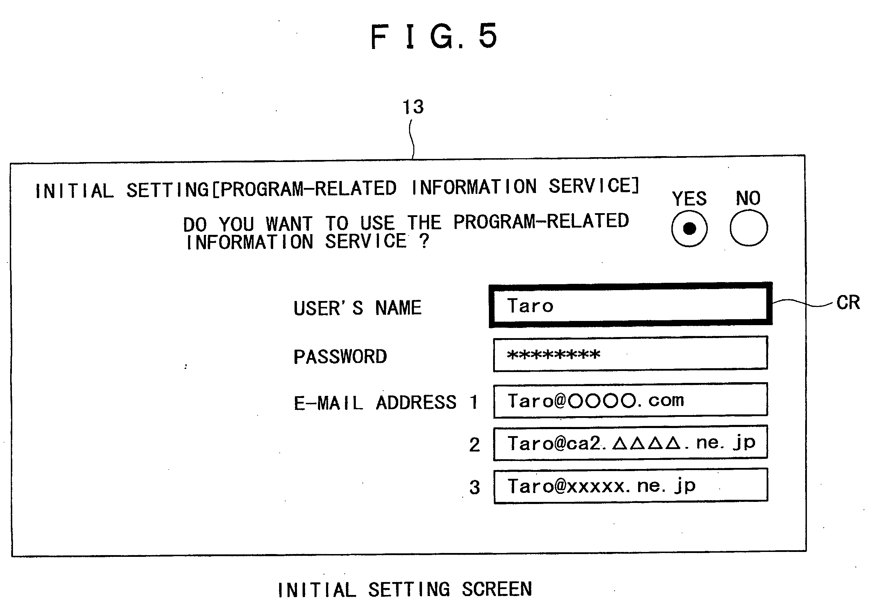

How the program-related information service of this invention typically works will now be described with reference to Figs. 5 through 10.

The program-related information service of this invention may be enjoyed by the user who owns the broadcast receiving apparatus 1. In making use of the program-related information service, the user is required to perform predetermined operations on the broadcast receiving apparatus 1.

The first thing to be done by the user on the broadcast receiving apparatus 1 is to make initial settings preparatory to receiving the program-related information service. How the initial settings are made is described below with reference to Fig. 5.

Illustratively, operating the menu key 24 on the remote controller 2 causes the display unit 13 of the broadcast receiving apparatus 1 to display a menu screen of a predetermined format showing various menu items. A cursor appearing on the menu screen can be moved from one menu item to another by operation of the cursor keys 22a, 22b, 22c and 22d. The user moves the cursor to an initial setting menu of the program-related information service by operating the cursor keys.

Operating the enter key 23 in the above state displays an initial setting screen for the program-related information service. A typical initial setting screen is indicated in Fig. 5.

The initial setting screen of Fig. 5 is shown illustratively to have check buttons "Yes" and "No" prompting the user to specify whether or not to use the program-related information service. The user may select one of the check buttons by operating the cursor keys 22a, 22b, 22c and 22d, before pushing the enter key 23 to finalize the "Yes" or "No" option in the check box.

Under the check buttons are character input areas for accommodating a user name, a password, and e-mail addresses 1, 2 and 3. In this case, the user may also operate the cursor keys 22a, 22b, 22c and 22d to select each of the input areas, and operate keys of the numeric/character key pad 25 to input the user's name, a password, and an e-mail address or addresses. The e-mail address or addresses to be input here should be those of the user's other communication devices capable of sending and receiving e-mails, the input e-mail address or addresses specifying the device or devices for receiving program-related information in the form of e-mails.

For example, if the user has a personal computer and a mobile phone for exchanging e-mails and if the user wants program-related information to be sent to these devices, the e-mail addresses of the devices are input in the e-mail address area.

In the state above, the user pushes the enter key 23. This finalizes the above settings and terminates the initial setting screen.

Suppose that with the settings entered as shown in Fig. 5, the user is watching a TV program received by the broadcast receiving apparatus 1 and that an interesting scene has appeared prompting the user to find out more about it. For example, the TV program may be introducing a restaurant attracting the user's attention, and the user may wish to have more detailed information about the restaurant.

In that case, the user gives a single push on the scene storage key 21 of the remote controller 2. A command generated by the key operation is received by the broadcast receiving apparatus 1. In response, the broadcast receiving apparatus 1 stores scene information about the scene that was being shown when the scene storage key 21 was operated.

The scene information comprises three kinds of information: information about the current time in effect upon scene storage key operation, information about the channel being selected, and information about a still picture on display when the scene storage key was operated.

Of the three kinds of information, the current time information and the channel information are used as identification information by the server 5 in identifying the scene in question. The current time information is derived from the clock unit 17 incorporated in the broadcast receiving apparatus 1.

The still picture information is used as thumbnails representative of scenes of interest on a scene information list transmission screen, to be described below. The thumbnails help the user to determine which scene to choose on the list transmission screen.

A plurality of items of scene information may be stored as long as a predetermined allowable number of scenes are not exceeded. While watching TV programs, the user may store displayed scenes by operating the scene storage key 21 as many times as desired until the allowable scene count is exhausted.

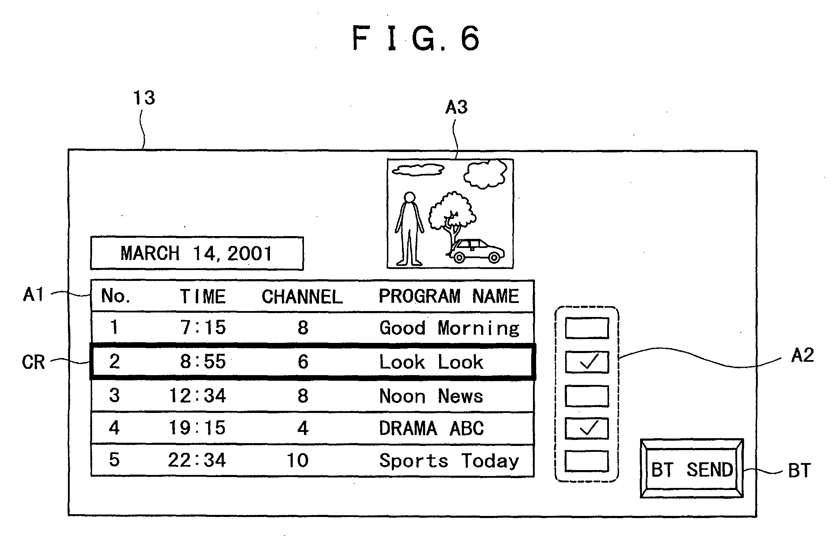

In the manner described, a plurality of items of scene information may be stored in the broadcast receiving apparatus 1. The embodiment of the invention later allows the user to select from the collected scenes only those interesting enough for the user to want to acquire program-related information in connection therewith. The selected scenes are transmitted as a scene information list to the server 5. Fig. 6 shows a scene information list transmission screen on which the user may perform operations for transmitting the scene information list.

On the scene information list transmission screen of Fig. 6, a stored list area A1 appears under a current time field.

In the stored list area A1, the items of scene information stored so far by the user are presented in the form of a list. Specifically, each of the stored scenes is shown associated with time and channel information. The time per scene is displayed in reference to the current time information as part of the corresponding scene information stored in the storage unit 16; the channel for each scene is displayed in reference to the channel information as another part of the corresponding scene information.

Although program names are shown displayed along with the time and channel information, they are not a mandatory part of the scene information; they are indicated merely to help the user better grasp the scene information of interest. Where a digital broadcast is in place, such program name information may be prepared using program name data found within the received transport stream.

On the right side of the stored list area A1 is a check box area A2. The area A2 has check boxes displayed in a manner corresponding to the items of scene information listed in the stored list area A1.

The user checks any of the check boxes to select one or more of the items of scene information presented in the stored list area A1. The selected items make up a scene information group that may be transmitted to the server 5 in a procedure described below.

In Fig. 6, a cursor CR is shown highlighting a No. 2 scene information field in the stored list area A1. A desired scene information field is selected by operating the upward and downward cursor keys 22a and 22b to move the cursor position vertically within the stored list area A1. Illustratively, with the cursor CR positioned to highlight a given scene information field, the user pushes the enter key 23. The key operation causes a thumbnail display area A3 to display a scene picture of the currently selected scene to which the cursor CR is being positioned. Every time a new scene information field is selected, the thumbnail display area A3 switches its scene picture to let the user view a thumbnail that should prompt the user to recall and reconfirm the original scene.

When the user wishes to select the scene information to be transmitted as a scene information list, the user illustratively operates the rightward cursor key 22d to move the cursor CR out of the stored list area A1 where it was positioned. The cursor CR is now in the check box area A2. In this state, operating the upward and downward cursor keys 22a and 22b moves the cursor between check boxes in the check box area A2. If the leftward cursor key 22c is operated here to move the cursor CR out of the check box area A2, the cursor CR is again positioned in the stored list area A1.

When there is any scene information desired to be transmitted as a scene information list, the user moves the cursor CR within the check box area A2 to the check box corresponding to the scene information of interest by operating the cursor keys.

In the above state, operating the enter key 23 checks the corresponding check box. The checked scene information is shown earmarked for transmission as a scene information list. If it is desired to deselect any previously selected check box, the user need only position the cursor CR to the check box in question and push the enter key 23. It is possible to alternate between selecting and deselecting any check box by simply operating the enter key 23 repeatedly.

Carrying out the operations above allows the user to select the scenes to be sent in the form of the scene information list as desired. The selected scenes are selected as the list by operating a transmission button BT. More specifically, the user illustratively operates the cursor keys 22a, 22b, 22c and 22d to move the cursor CR on to the transmission button BT inside the scene information list transmission screen so as to highlight the button BT. Then pushing the enter key 23 activates the transmission button BT, which triggers transmission of the scene information list to the server 5.

When transmitting a scene information list, the broadcast receiving apparatus 1 first prepares the list made up of at least one scene information item selected on the scene information list transmission screen.

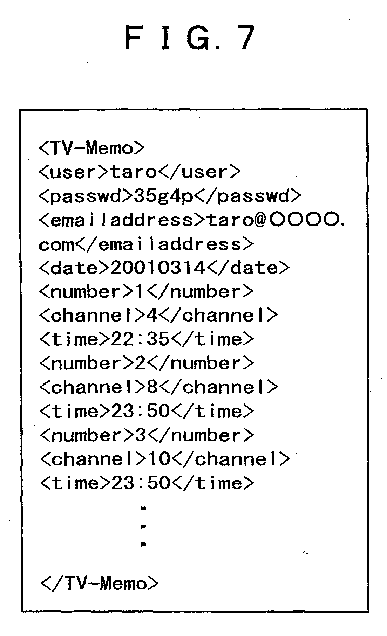

The scene information list thus prepared has a structure such as one shown in Fig. 7.

As illustrated, the scene information list is described in XML (extensive Markup Language). The entire scene information is delimited by tags <TV-Memo></TV-Memo>. As elements of this list, a user name (<user></user>) is first described therein, followed by a password (<passwd></passwd>) and an e-mail address (<emailaddress></emailaddress>). These elements are constituted by the user name, password, and e-mail address which were input on the initial setting screen shown in Fig. 5.

Thereafter the current date (<date></date>) is described, followed successively by the items of scene information selected on the scene information list transmission screen shown in Fig. 6.

In this example, one scene information item is composed of a scene information number (<number></number>), a channel (<channel></channel>), and a time (<time></time>). The scene information number (<number></number>) represents the position of a given item in a sequence of the list. The numbers are determined by the order in which the corresponding items were described during preparation of the list. Each channel (<channel></channel>) is described using a numeral denoting a given channel. The time (<time></time>) is described to denote the time at which the scene in question was stored, i.e., the time at which the scene was originally broadcast. As mentioned above, the channel (<channel></channel>) and time (<time></time>) are the information provided so as to create scene information in combination with a still picture of each scene at the time of scene storage.

After preparing the scene information list of the above-described structure, the broadcast receiving apparatus 1 using illustratively the modem 18 establishes a dial-up connection to the server 5 on the Internet 8 by way of an Internet service provider. With the connection to the server 5 confirmed, the broadcast receiving apparatus 1 transmits the prepared scene information list to the server 5.

In response to the scene information list sent as described, the server 5 carries out its operations as described below. In the ensuing description, the operations of the server 5 are implemented under control of the control unit 36 performing what is prescribed by executable applications held in the storage unit 31.

The server 5 receives the scene information list through the network interface 35. By referring to the user name and password in the acquired scene information list as well as to the user information stored in the user database 33, the server 5 determines whether the scene information list has been transmitted from an authorized user.

When the transmitting scene information list is authenticated, the server 5 reads a certain scene information description from the received scene information list and searches the program-related information database 32 in the storage unit 31 for the URLs stored in association with the scene information in question. For this embodiment, the URL information serves as the program-related information designated by the scene information.

The search for the URLs is carried out illustratively as described bellow.

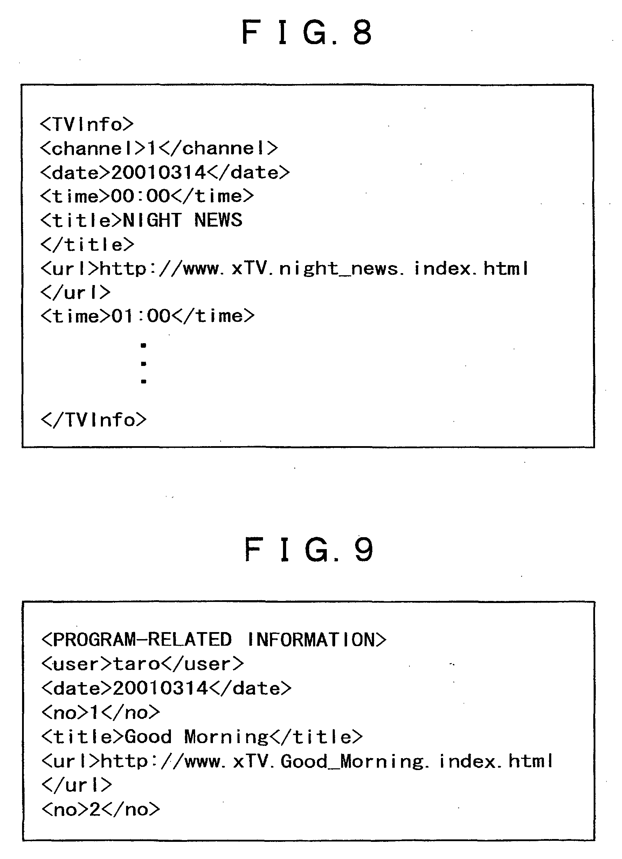

Fig. 8 shows a typical structure of the program-related information database 32.

As with the scene information list structure in Fig. 7, the program-related information database 32 is described in XML. The entire program-related information database 32 is delimited by tags <TVInfo></TVInfo>. As illustrated, the leading tag is followed by a channel (<channel>1</channel>) and a date (<date>20010314</date>), indicating that the ensuing information concerns a program broadcast on channel 1 on March 14, 2001.

Thereafter a broadcast time (<time>00:00</time>) and a title (<title>Night News</title>) are described, indicating the time at which the broadcast was started and the title of the broadcast program (the title may merely portray what was broadcast by the program). This description is followed by a URL (<url>http//.....</url>) representative of the program-related information relevant to a broadcast time zone started with the broadcast time. After this, the broadcast time of another program (<time></time>) is described, followed by the program's title (<title></title>) and a related URL (<url></url>).

That is, on a given broadcast date over a given channel, each broadcast time zone is defined by each broadcast time (<time></time>). The title (<title></title>) and URL information (<url></url>) are then described for each of the broadcast time zones thus delimited.

When the control unit 36 of the server 5 carries out a search through the program-related information database 32 in accordance with the received scene information list, the control unit 36 reads and analyzes one item of scene information at a time from the description of the scene information list. Initially, the search is made on the basis of the scene information described as a scene information number (<number>1</number>) in the scene information list.

Each scene information number in the scene information list is followed by a channel (<channel></channel>) and a scene storage time (<time></time>), as depicted in Fig. 7. Through the use of the foregoing date (<date></date>) and the channel information (<channel></channel>) in the scene information list, it is possible to search the program-related information database 32 for a description area covering the broadcast time (<time></time>), title (<title></title>), and URL (<url></url>) under control of the channel (<channel></channel>) and date (<date></date>) information containing the description of the program-related information to be retrieved.

After that, a comparison is made between the time (<time></time>) delimited in the above-defined description area and the scene storage time (<time></time>) described as part of the scene information. The comparison makes it possible to find out the broadcast time zone in which the scene storage time (<time></time>) in question is included. This in turn permits determining the title (<title></title>) and URL (<url></url>) described in association with the broadcast time zone recognized. The title (<title></title>) and URL (<url></url>) thus determined constitute the program-related information corresponding to a single item of scene information as part of the scene information list.

Thereafter, the above-described procedure is repeated to search for the scene information associated with each of the remaining scene information numbers (<number></number>) within the scene information list. This allows the program-related information to be acquired with regard to each of the scene information items involved.

When all scene information items in the scene information list have been searched for as described, the program-related information (i.e., title (<title></title>) and URL (<url></url>)) about each scene information item is obtained. At this point, the control unit 36 transmits the acquired program-related information using an e-mail.

In creating a transmission file of the e-mail, the control unit 36 describes the program-related information in compact HTML in a text area, as shown in Fig. 9. The mail is titled <Program-Related Information> in this example, followed by the user name (<user></user>) and broadcast date (<date></date>). Thereafter each scene information item is given a number (<no></no>), a title (<title></title>), and a URL (<url></url>), in that order.

On receiving the e-mail of the above description structure, the communication device activates a WWW browser function to let the user visually browse the received information.

Where such program-related information is to be transmitted as an e-mail, the destination of the mail is derived from the e-mail address (<emailaddress></emailaddress) contained in the scene information list received earlier. From the user's point of view, the user-designated communication device receives an e-mail carrying relevant program-related information in keeping with the initial settings made as shown in Fig. 5.

In transmitting the e-mail, the control unit 36 controls the network interface 35 illustratively in accordance with TCP/IP, i.e., an Internet-compatible communication protocol.

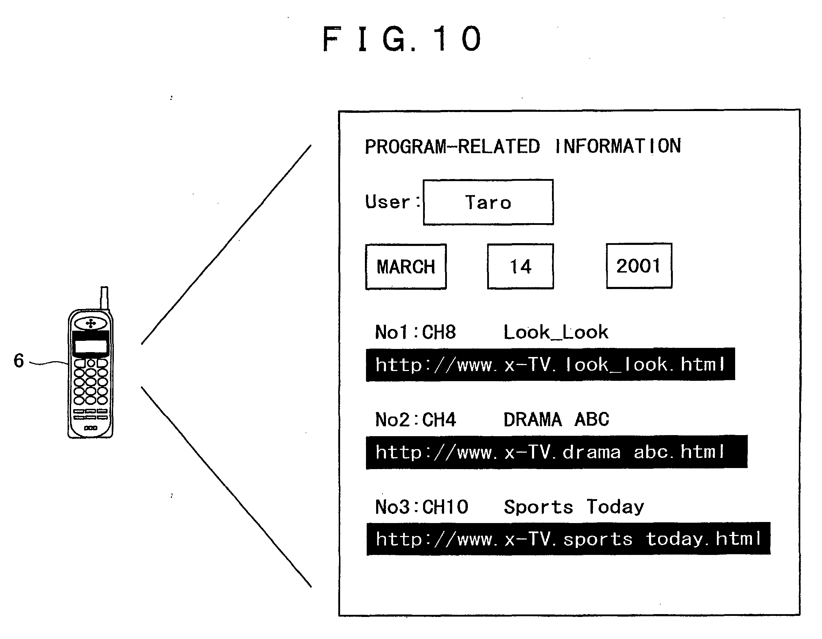

Fig. 10 shows illustratively an e-mail carrying program-related information, received by and displayed on the mobile phone 6 (see Fig. 1), an Internet-compatible device owned by the user.

As described with reference to Fig. 9, the program-related information sent from the server 5 as an e-mail is described in HTML. That means the program-related information whose structure is shown in Fig. 9 is reproduced and displayed as a browsable HTML document on the mobile phone 6, as illustrated in Fig 10. Specifically, the document is shown titled "Program-Related Information" followed by the user name "User: Taro" and the date "March 14, 2001." Then follow the channel, title and URL for each number being displayed.

Because the document is in HTML format, the URL part is hyperlinked so that a click on this part provides access to the corresponding WWW page of this URL.

### 5. Processing operations

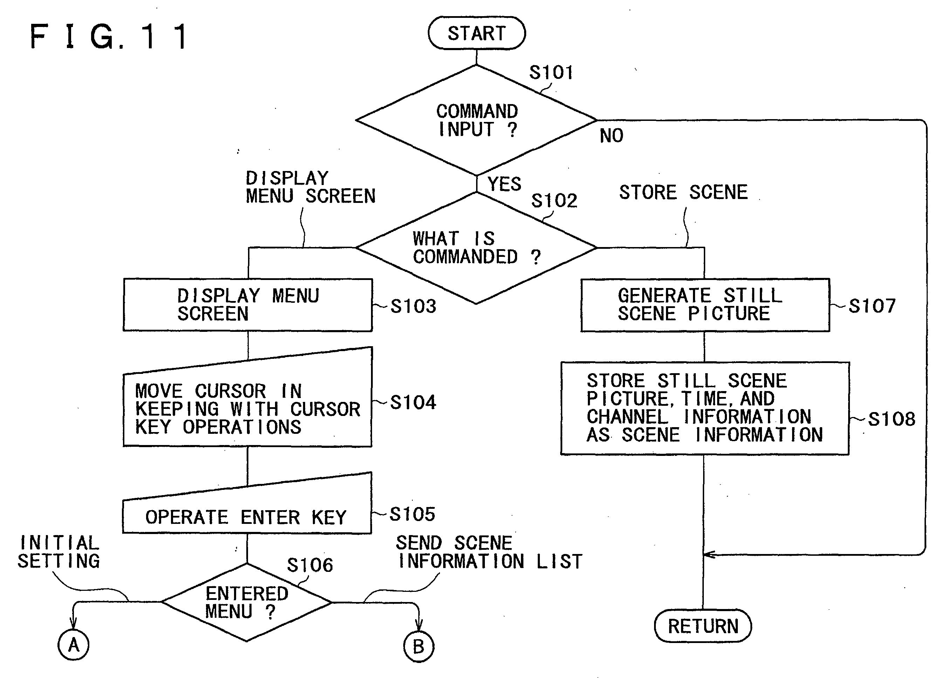

Described below with reference to the flowcharts of Figs. 11 through 13 are the processing operations to be performed by the broadcast receiving apparatus 1 in running the above-described program-related information service. The specific steps in the flowcharts are executed by the control unit 15 inside the broadcast receiving apparatus 1.

In step S101 of Fig. 11, the control unit 15 waits for a command to be input. That is, the control unit 15 determines whether any command signal transmitted as a result of an operation on the remote controller 2 is received by the user interface control unit 19 and forwarded to the control unit 15.

If in step S101 a command signal is found to be input, step S102 is reached. In step S102, the control unit 15 finds out what is designated by the command. If the command specifies that a menu screen is to be displayed in response to the operation on the menu key 24, then step S103 is reached. If the command designates storage of a scene in keeping with the operation on the scene storage key 21, then step S107 is reached.

If the command is something other than the menu screen display command or the scene storage command, an appropriate processing operation, not shown, corresponding to the command in question is carried out.

In step S103, the control unit 15 causes the display unit 13 to display the menu screen. While the menu screen is being displayed, step S104 is reached in which the control unit 15 allows the cursor to move from one menu item to another on the screen in response to the cursor keys 22a, 22b, 22c and 22d being operated on.

The cursor is allowed to move in step S104 until the enter key 23 is pushed to finalize the selection. When operation of the enter key 23 is recognized in step S105, step S106 is reached.

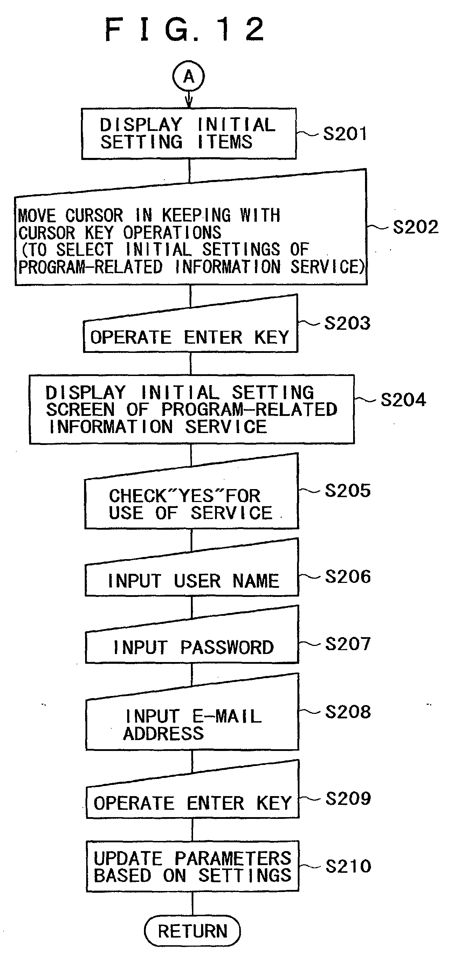

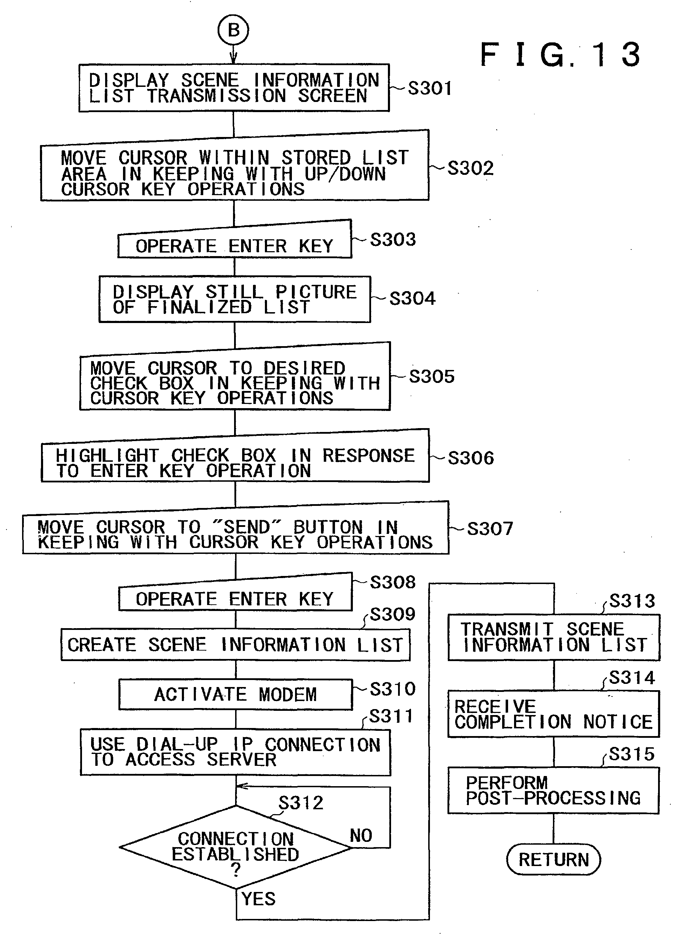

In step S106, the control unit 15 recognizes the menu item definitely selected by operation of the enter key 23. If the selected menu item points to the initial setting in general, step S201 of Fig. 12 is reached; if the selected menu item designates the transmission of a scene information list, then step S301 of Fig. 13 is reached.

In practice, a menu item other than the initial setting in general or the transmission of a scene information list may be selected. In such a case, a processing operation relevant to the selected menu item is carried out.

Step S107 and subsequent steps in Fig. 11 will be discussed later. What follows is a description of the steps shown in Fig. 12.

In step S201 of Fig. 12, the control unit 15 causes an initial setting item screen to appear presenting various initial setting items. In step S202, the cursor is allowed to move on the initial setting item screen in keeping with the cursor keys being operated on. The cursor movement in step S202 is continued until the enter key 23 is pushed. If the cursor is positioned to, say, the initial settings for the program-related information service shown in Fig. 5 and if the enter key 23 is operated in step S203, then step S204 is reached.

In step S204, the control unit 15 causes an initial setting screen for the program-related information service to appear. This allows the user to operate on the initial setting screen as desired using the remote controller 2. For purpose of simplification and illustration, only typical operations representative of steps S205 through S209 are discussed below.

In step S205, the "Yes" check button is shown checked in response to the "Yes" option being selected over the "No" preparatory to using the program-related information service.

In step S206, the user's name is allowed to be input in response to user name input operations.

In step S207, a password is allowed to be input in response to password input operations.

In step S208, an e-mail address is allowed to be input in response to e-mail address input operations.

The operations above, when carried out, should have all initial setting items input for the program-related information service. Then the enter key 23 is operated in step S209, which transfers control to step S210.

In step S210, the parameters of the set data for the program-related information service are updated so as to reflect the initial items input thus far. This allows the control unit 15 to perform control processes relevant to the program-related information service based on the set data with their parameters updated.

If in step S102 the command is found to designate scene storage in response to the scene storage key being operated on, step S107 is reached. In step S107, a still scene picture is created out of the scene being output to the display unit 13 for display.

In step S108, one item of scene information corresponding to the scene storage operation this time is created by associating the still picture data generated in step S107 with the current time and channel information. The scene information thus acquired is stored into the storage unit 16.

If in step S106 of Fig. 11 the selected menu item denotes the transmission of a scene information list, then step S301 of Fig. 13 is reached.

In step S301, the control unit 15 causes the scene information list transmission screen shown in Fig. 6 to appear on the display unit 13. Specifically, the control unit 15 reads channel and time (as well as title) information making up scene information from the storage unit 16. Frame picture data constituting the scene information list transmission screen are then generated by having the retrieved items of scene information reflect what is displayed in the stored list area A1. The frame picture data thus generated are displayed on the display unit 13.

When the scene information list transmission screen is displayed as described above, the user may also operate on the screen as desired using the remote controller 2. For purpose of simplification and illustration, as in the foregoing example, only typical operations representative of steps S302 through S309 are discussed hereunder.

In step S302, the cursor CR is moved from one scene information field to another inside the stored list area A1 illustratively in response to the upward and downward cursor keys 22a and 22b being operated on. In step S303, with the cursor CR positioned to a given scene information field, the control unit 15 recognizes an operation on the enter key 23. With the key operation recognized, step S304 is reached and the control unit 15 causes the thumbnail display area A3 to display a thumbnail still picture as one component of the scene information field to which the cursor CR is being positioned.

In step S305, the control unit 15 moves the cursor into check boxes of the check box area A2 illustratively out of the stored list area A1 where the cursor CR was positioned, in response to the upward, downward, leftward and rightward cursor keys 22a, 22b, 22c and 22d being operated by the user.

In step S306, with the cursor CR positioned to a given check box, the control unit 15 reverses the check state of the check box in response to the enter key 23 being operated on.

Obviously, the confirmation of the selected scene information field and the reversing of the check state in the check box may be repeated as desired by the user in practice. The cursor may also be moved as needed in response to the cursor keys being manipulated.

In step S307, the control unit 15 allows the cursor CR to move up and down or right and left before getting positioned to the transmission button BT illustratively in response to the cursor keys operated by the user.

With the cursor CR thus positioned to the transmission button BT, the control unit 15 recognizes an operation on the enter key 308 in step S308. When the key operation is recognized in step S308, control is passed on to step S309 and subsequent steps which are carried out as follows:

In step S309, the control unit 15 creates a scene information list to be transmitted to the server 5. Specifically, the control unit 15 retrieves from the storage unit 16 the channel and time information about each of the scene information items earmarked in the corresponding check boxes by the user in the above operations, as well as the user's name, password, and e-mail address or addresses stored at the time of initial setting. The retrieved items of information are composed into the scene information list whose structure was discussed above with reference to Fig. 7.

In step S310, the modem 18 is activated. In step S311, the control unit 15 proceeds to establish a dial-up connection to the server 5. In step S312, the control unit 15 determines whether the connection is established. When the connection is found established, step S313 is reached.

In step S313, the control unit 15 proceeds to transmit the scene information list created earlier in step S309. The server 5 for its part carries out an authentication process based on the user name and password found in the transmitted scene information list. If the authentication is successful and if the list is received without error, the server 5 transmits a completion notice to the broadcasting receiving apparatus having sent the list, informing the latter that transmission of the scene information list has been normally completed. The broadcast receiving apparatus 1 receives the completion notice in step S315 and goes to step S315.

In step S315, the control unit 15 performs predetermined post-processing relevant to the termination of communication. Illustratively, the control unit 15 severs the connection with the server 5 and deactivates the modem 18. The control unit 15 may additionally cause the display unit 13 to give a display screen telling the user that the transmission of the scene information list has come to an end.

Although the description above contains many specificities, these should not be construed as limiting the scope of the invention but as merely providing illustrations of some of the presently preferred embodiments of this invention.

For example, although the scene information transmitted from the broadcast receiving apparatus 1 to the server 5 was described as composed of current time information and channel information, this is not limitative of the invention. Alternatively, scene picture information may be additionally transmitted. The scene pictures thus sent to the server 5 may be utilized illustratively as outlined below.

When transmitting program-related information retrieved with respect to a scene information list, the server 5 may describe the information in such a manner that a scene picture corresponding to each of the scenes included in the information will be reproduced and displayed as an object. The scene pictures as objects may then be transmitted together with the HTML file constituting the program-related information. This allows the device having received the program-related information to display URLs and a scene picture for each scene in the format shown in Fig. 10. The display allows the user visually to check the received information for easier comprehension.

In the embodiments discussed above, the time information constituting part of the scene information was shown derived from the clock unit 17. This makes it possible to better run the program-related information service with analog broadcasts which, unlike digital broadcasts, have no time information inserted into their broadcast signals. On the other hand, where digital broadcasts are implemented, the time information inserted in the received transport stream may be utilized as time information relevant to the scene information. This eliminates the need for the time information provided by the clock unit 17.

The scene information list transmitted from the broadcast receiving apparatus 1 to the server 5 and the program-related information database 32 in the storage unit 31 of the server 5 are not limited structurally to the XML or HTML format. Likewise, the program-related information sent from the server 5 to such Internet-compatible devices as personal computers or mobile phones is not limited to the compact HTML format.

As described, the broadcast receiving apparatus according to the invention allows the user watching a TV program on the apparatus to store desired scenes. Scene information (i.e., information for identifying the stored scenes) is constituted at least by channel information and time information when stored into the broadcast receiving apparatus.

When the scene information thus created and stored is transmitted to the server, the server searches for program-related information such as URLs corresponding to the received scene information. The retrieved program-related information is sent to the user's communication device designated in advance.

In the above setup, the information related to the TV programs attracting users' attention is provided not by the broadcasting party as a data broadcast but by servers located on a communication network such as the Internet.

It follows that in running an information service approximately equivalent to the data broadcast, the broadcasting party need not procure necessary equipment or human resources to deal with the data broadcast. The broadcast receiving apparatus, for its part, need only be supplemented with modest arrangements for storing scene information in response to the user's scene storage operations and for transmitting the stored scene information over the communication network. In other words, there is no need at present to set up costly structures for addressing data broadcasts. Internet-compatible communication devices are already coming into general use today, and the operations for scene storage are implemented by adding relatively simple software. Under these circumstances, the inventive functions to be added to the broadcast receiving apparatus will be simple in structure. With few hardware modifications required, the costs involved are appreciably low.

Whereas this invention continues to be helpful in the future, it is particularly of value at present, with the acceptance of data broadcasts being hampered by the inordinate costs of building their infrastructure. At a fraction of the costs for data broadcasts, the invention is valuable in offering an information-providing service equivalent to the data service. The invention can be applied not only to digital broadcasts but also to the currently-prevalent analog satellite broadcasts and terrestrial broadcasts.

The broadcast receiving apparatus according to the invention allows the user to retain a plurality of scenes on the spot so that the really preferred scenes will be selectively transmitted later. That is, the user can store a large number of scenes whenever he or she wants while watching the TV program. With the attractive scenes thus stored, the user is later given the chance to select only the scenes deemed really necessary for transmission to the server. This provides extra convenience for the user.

Upon storage of each scene, scene picture information corresponding to the user's scene storage operation is stored as part of the scene information along with the applicable channel information and time information. Such scene pictures are helpful in constructing an easier-to-use visually-oriented graphical user interface for handling the scene information.

When transmitting program-related information to communication devices, the server utilizes the e-mail feature by way of the Internet. With e-mails in such widespread use today, it is convenient for the general public to receive program-related information by e-mail.

The broadcast receiving apparatus of the invention further allows the user to input information for designating a desired communication device (e.g., using an e-mail address) to which the server is to transmit program-related information, and transmits the designated information to the server together with scene information. Given the designated information, the server transmits program-related information to the communication device in question. With the program-related information thus sent to the desired device, the user of the broadcast receiving apparatus can enjoy more convenience than ever before.
FIG. 1
   - 8: INTERNET
FIG. 2
   - 11: RECEPTION UNIT
   - 12: AUDIO/VIDEO PROCESSING UNIT
   - 13: DISPLAY UNIT
   - 15: CONTROL UNIT
   - 18: MODEM
   - 17: CLOCK UNIT
   - 16: STORAGE UNIT
   - 19: USER INTERFACE CONTROL UNIT
   - 8: INTERNET
FIG. 3
   - 21: STORE SCENE
   - 22a: UP
   - 23: ENTER
   - 22c: LEFT
   - 22d: RIGHT
   - 22b: DOWN
   - 24: MENU
   - 25: (SYMBOL)
FIG. 4
   - 8: INTERNET
   - 31: STORAGE UNIT
   - 32: PROGRAM-RELATED INFORMATION DATABASE
   - 33: USER DATABASE
   - 34: EXECUTABLE APPLICATIONS
   - 35: NETWORK INTERFACE
   - 36: CONTROL UNIT
FIG. 5
   - 1: INITIAL SETTING [PROGRAM-RELATED INFORMATION SERVICE]
   - 2: DO YOU WANT TO USE THE PROGRAM-RELATED INFORMATION SERVICE?
   - 3: YES
   - 4: NO
   - 5: USER'S NAME
   - 6: PASSWORD
   - 7: E-MAIL ADDRESS
   - 8: INITIAL SETTING SCREEN
FIG. 6
   - 1: MARCH 14, 2001
   - 2: TIME
   - 3: CHANNEL
   - 4: PROGRAM NAME
   - 5: DRAMA ABC
   - BT: SEND
FIG. 8
   <title>NIGHT NEWS
FIG. 9
   <PROGRAM-RELATED INFORMATION>
FIG. 10
   PROGRAM-RELATED INFORMATION
   (MARCH) (14) (2001)
   Drama ABC
FIG. 11
   S101 COMMAND INPUT?
   S102 WHAT IS COMMANDED?
      DISPLAY MENU SCREEN STORE SCENE
   S103 DISPLAY MENU SCREEN
   S104 MOVE CURSOR IN KEEPING WITH CURSOR KEY OPERATIONS
   S105 OPERATE ENTER KEY
   S106 ENTERED MENU?
      INITIAL SETTING SEND SCENE INFORMATION LIST
   S107 GENERATE STILL SCENE PICTURE
   S108 STORE STILL SCENE PICTURE, TIME, AND CHANNEL INFORMATION AS SCENE INFORMATION
FIG. 12
   S201 DISPLAY INITIAL SETTING ITEMS
   S202 MOVE CURSOR IN KEEPING WITH CURSOR KEY OPERATIONS (TO SELECT INITIAL SETTINGS OF PROGRAM-RELATED INFORMATION SERVICE)
   S203 OPERATE ENTER KEY
   S204 DISPLAY INITIAL SETTING SCREEN OF PROGRAM-RELATED INFORMATION SERVICE
   S205 CHECK "YES" FOR USE OF SERVICE
   S206 INPUT USER NAME
   S207 INPUT PASSWORD
   S208 INPUT E-MAIL ADDRESS
   S209 OPERATE ENTER KEY
   S210 UPDATE PARAMETERS BASED ON SETTINGS
FIG. 13
   S301 DISPLAY SCENE INFORMATION LIST TRANSMISSION SCREEN
   S302 MOVE CURSOR WITHIN STORED LIST AREA IN KEEPING WITH UP/DOWN CURSOR KEY OPERATIONS
   S303 OPERATE ENTER KEY
   S304 DISPLAY STILL PICTURE OF FINALIZED LIST
   S305 MOVE CURSOR TO DESIRED CHECK BOX IN KEEPING WITH CURSOR KEY OPERATIONS
   S306 HIGHLIGHT CHECK BOX IN RESPONSE TO ENTER KEY OPERATION
   S307 MOVE CURSOR TO "SEND" BUTTON IN KEEPING WITH CURSOR KEY OPERATIONS
   S308 OPERATE ENTER KEY
   S309 CREATE SCENE INFORMATION LIST
   S310 ACTIVATE MODEM
   S311 USE DIAL-UP IP CONNECTION TO ACCESS SERVER
   S312 CONNECTION ESTABLISHED?
   S313 TRANSMIT SCENE INFORMATION LIST
   S314 RECEIVE COMPLETION NOTICE
   S315 PERFORM POST-PROCESSING

## Claims

1. An information providing system comprising at least a broadcast receiving apparatus and a server apparatus, wherein said broadcast receiving apparatus comprises:
receiving and tuning means for receiving and tuning in to broadcast waves;
current time acquiring means for acquiring current time information;
information generating means which, in response to an input instruction, generates identification information made up at least of information about a channel currently selected by said receiving and tuning means and of said current time information acquired by said current time acquiring means; and
transmitting means for transmitting said identification information to said server apparatus over a predetermined network; and
wherein said server apparatus comprises:
searching means for searching for program-related information about said channel based on the received identification information; and
transmitting means for transmitting said program-related information searched for by said searching means to a predetermined communication device over said predetermined network.

2. A broadcast receiving apparatus comprising:
receiving and tuning means for receiving and tuning in to broadcast waves;
current time acquiring means for acquiring current time information;
information generating means which, in response to an input instruction, generates identification information which is made up at least of information about a channel currently selected by said receiving and tuning means and of said current time information acquired by said current time acquiring means, said identification information being intended for use by a server apparatus in searching for program-related information to be transmitted to a predetermined communication device; and
transmitting means for transmitting said identification information to said server apparatus over a predetermined network.

3. The broadcast receiving apparatus according to claim 2, further comprising:
holding means for holding a plurality of items of said identification information; and
user interface means which, in response to an input operation, selects any one of said plurality of items of said identification information held by said holding means, the selected item of said identification information being transmitted by said transmitting means.

4. The broadcast receiving apparatus according to claim 2, wherein said identification information generating means generates said identification information made up of the channel information, of said current time information, and of picture information about a television broadcast currently selected by said receiving and tuning means in response to said input instruction.

5. The broadcast receiving apparatus according to claim 2, further comprising interfacing means for permitting input of communication device designation information for designating a communication device to which said server apparatus transmits said program-related information;
wherein said transmitting means transmits said communication device designation information to said server apparatus along with said identification information.

6. A server apparatus comprising:
receiving means for receiving channel information and identification information over a predetermined network, said channel information being about at least a channel currently selected by a broadcast receiving apparatus, said identification information having being acquired by said broadcast receiving apparatus;
searching means for searching for program-related information about a program content on said channel in accordance with the received identification information; and
transmitting means for transmitting said program-related information searched for by said searching means to a predetermined communication device over said predetermined network.

7. The server apparatus according to claim 6, wherein said transmitting means transmits said program-related information to said predetermined communication device using e-mail over the Internet.

8. The server apparatus according to claim 6, wherein said receiving means receives communication device designation information which is generated by said broadcast receiving apparatus in response to an input operation and which is transmitted along with said identification information by said broadcast receiving apparatus; and
wherein said transmitting means transmits said program-related information to the communication device designated by the received communication device designation information.
